(19) Europäisches Patentamt
European Patent Office
Office européen des brevets

(11) **EP 2 972 005 B1**

(12) **EUROPEAN PATENT SPECIFICATION**

(45) Date of publication and mention
of the grant of the patent:
**21.12.2016 Bulletin 2016/51**

(51) Int Cl.:
***F24J 2/46*** *(2006.01)*     ***G02F 1/19*** *(2006.01)*
***F24J 2/50*** *(2006.01)*     ***F24J 2/40*** *(2006.01)*

(21) Application number: **14712444.0**

(22) Date of filing: **03.03.2014**

(86) International application number:
**PCT/US2014/019894**

(87) International publication number:
**WO 2014/164010 (09.10.2014 Gazette 2014/41)**

(54) **THERMO-RESPONSIVE ASSEMBLY AND METHODS FOR MAKING AND USING THE SAME**

THERMO-REAKTIVE VORRICHTUNG UND ENTSPRECHENDE VERFAHREN FÜR HERSTELLUNG UND VERWENDUNG

DISPOSITIF THERMO-SENSIBLE ET METHODES CORRESPONDANTES DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2013 US 201361780285 P**

(43) Date of publication of application:
**20.01.2016 Bulletin 2016/03**

(73) Proprietor: **SABIC Global Technologies B.V.**
**4612 PX Bergen op Zoom (NL)**

(72) Inventors:
• **RICHARDS, William David**
**Niskayuna, New York 12309 (US)**
• **SMIGELSKI, Paul Michael**
**Niskayuna, New York 12309 (US)**
• **PICKETT, James Edward**
**Niskayuna, New York 12309 (US)**

(74) Representative: **Modiano, Micaela Nadia et al**
**Modiano & Partners**
**Thierschstrasse 11**
**80538 München (DE)**

(56) References cited:
**EP-A2- 1 935 910**     **US-A- 4 268 413**
**US-A- 4 543 386**

EP 2 972 005 B1

**Description**

BACKGROUND OF THE INVENTION

Disclosed herein are thermo-responsive assemblies that can help control stagnation temperatures in solar panels used to provide hot water in domestic and commercial entities.

Solar panels can be efficient and cost-effective sources of hot water for domestic and commercial hot water heating as well as for space heating. Plastic solar panels or modules commonly are constructed from a transparent polymer glazing sheet (e.g., polycarbonate multi-wall sheet), a black plastic absorber sheet with extruded water channels (e.g., polysulfone or polyphenylene ether blend multi-wall sheet), an insulating backing, and necessary water manifolds and frame pieces. Since the absorber layer is insulated from both the front and back, temperatures much higher than ambient can be attained. Modules are commonly designed to produce water as hot as 70 degrees Celsius (°C) to 80°C.

There are sometimes periods in which the module is exposed to the sun and water or other heat transfer fluid is not flowing through the absorber sheet, and the module can overheat. This is termed "stagnation conditions." Module temperatures in excess of 140°C or even 150°C are possible during these stagnation conditions. During stagnation conditions, the heat deflection temperature of the plastic components can be exceeded, resulting in irreversible buckling, thermal expansion beyond design limits, and/or other thermally-induced effects that can lead to failure of the unit. Using only polymers capable of withstanding such temperatures greatly increases the cost of the module. Control of stagnation temperature therefore is an important design requirement for efficient, cost-effective plastic solar modules.

Accordingly, there is a need for a thermo-responsive assembly that can help control stagnation temperatures to provide an efficient, cost-effective plastic solar module.

Prior art document US 4 268 413 A describes an assembly with reversibly variable temperature-dependent light absorbance, said assembly comprising a glazing layer, a light absorbing layer and a thermo-responsive layer between the glazing layer and the light i absorbing layer, wherein the thermo-responsive layer comprises a matrix polymer and a filler, wherein the refractive indices of the matrix polymer and the filler substantially match at 25°C.

BRIEF-DESCRIPTION

Disclosed herein are thermo-responsive assemblies and methods for making and using the same.

In an embodiment, an assembly, comprising: a glazing layer; a light absorbing layer; and a thermo-responsive layer between the glazing layer and the light absorbing layer. The thermo-responsive layer comprises a matrix polymer having a glass transition temperature and an inorganic filler having a particle size, wherein the matrix polymer comprises 0.5 to 10 weight percent of repeat units derived from acrylonitrile, based upon a total weight of the matrix polymer. The refractive indices of the matrix polymer and the inorganic filler differ by less than or equal to 0.05 at 25°C.

In another embodiment, a method of making the assembly comprising a glazing layer; a light absorbing layer; and a thermo-responsive layer between the glazing layer and the light absorbing layer, comprises: forming the glazing layer; forming the light absorbing layer; and forming the thermo-responsive layer between the glazing layer and the light absorbing layer. The thermo-responsive layer comprises a matrix polymer having a glass transition temperature and an inorganic filler having a particle size. The refractive indices of the matrix polymer and the inorganic filler differ by less than or equal to 0.05 at 25°C.

These and other features of the assembly and methods of making will be understood from the drawings and description below.

BRIEF DESCRIPTION OF THE DRAWINGS

The following is a brief description of the drawings wherein like elements are numbered alike and which are presented for the purposes of illustrating the exemplary embodiments disclosed herein and not for the purposes of limiting the same.

FIG. 1 is a graphical illustration of the refractive index versus temperature of a matrix polymer and a filler.
FIG. 2 is a schematic illustration of a thermo-responsive assembly at normal use temperatures.
FIG. 3 is a schematic illustration of the thermo-responsive assembly of FIG. 2 at elevated temperatures above the glass transition temperature of the materials used in the thermo-responsive assembly.
FIG. 4 is a graphical illustration of the strain versus time of various matrix polymers and a filler as described in Example 5.
FIG. 5 is a graphical illustration of viscosity versus shear rate of various matrix polymers and a filler as described in Example 5.
FIG. 6 is a graphical illustration of the reflection versus temperature of a matrix polymer and a filler as described in Example 6.

DETAILED DESCRIPTION

Disclosed herein are thermo-responsive assemblies comprising a thermo-responsive layer comprising a transparent matrix polymer filled with an inorganic material (i.e., filler). The inorganic material can have a particle size of less than 10 micrometers ($\mu$m) and a matching refractive index with the matrix polymer (e.g., wherein the refractive indices differ by less than or equal to 0.05 at 25°C). The thermo-responsive assemblies as described herein can have little or no change in the reflection of incident light at temperatures below the glass transition temperature of the matrix polymer, since the refractive index of the materials used in the assemblies changes slowly below the glass transition temperature (Tg) of the matrix polymer. The thermo-responsive assemblies disclosed herein, can however, have increased reflection above the glass transition temperature of the matrix polymer. This is because above the Tg, the refractive index of the transparent matrix polymer generally decreases rapidly, while the refractive index of the inorganic material remains nearly constant. The resulting mismatch in the refractive indices can result in some reflection, with for example, 10% to 20% reflection being sufficient to keep the thermo-responsive assemblies from buckling or other mechanical failures. The term thermo-responsive layer is used herein to refer to a layer that changes its light transmission in response to a temperature change.

The thermo-responsive assembly is often used in non-horizontal configurations (with respect to the ground). For example, the thermo-responsive assembly can be used as a solar hot water module in a non-horizontal configuration. Since the thermo-responsive layer can be at temperatures greater than its glass transition temperature of the material for long enough periods of time that the thermo-responsive layer can experience creep and flow of the material. This creep and flow of the material is undesirable as it can result in a thinner material at one end and a thicker material at the other end. It was surprisingly discovered that incorporating a relatively small amount, for example, 0.5 to 10 weight percent (wt.%), specifically, 1 to 5 wt.%, of repeat units derived from acrylonitrile in the backbone of the matrix polymer can result in reduced creep. For example, a greater than or equal to 20% reduction, specifically, a 20 to 50% reduction in the extent of creep was achieved without adversely affecting the processing characteristics of the thermo-responsive layer.

Mechanical louvers could be made to open at elevated temperatures and thereby open the module to release heat, but this introduces moving parts, increases complexity and cost, and provides an additional failure mechanism. Many concepts using thermo-responsive materials for thermal control rely on , for example, a phase separation process, an abrupt phase transition, by strongly differing temperature dependencies of the refractive indices of domains and matrix, and/or a change in their visible optical properties to cause scattering of light and attenuate the amount of light that can reach an absorber layer (e.g., certain hydrogels and polymer blends with critical temperatures for miscibility, liquid crystals, etc.). However, none of these systems seem practical or cost-effective for a low-cost plastic solar module since they involve components that are fluid or involve difficult to tailor chemical material components.

The thermo-responsive assemblies disclosed herein can comprise a glazing layer, a thermo-responsive layer, and an absorber layer (e.g., a light absorbing layer), wherein the thermo-responsive layer can be between the glazing layer and the absorber layer. The glazing layer and the thermo-responsive layer can generally be transparent (e.g., have greater than or equal to 85% transmission in the visible and infrared ranges of the electromagnetic spectrum), while the absorber layer can be opaque. The absorber layer can generally be black, meaning that it will not have any transmission. The absorber layer can absorb incoming light and transfer the energy to a circulating fluid, such as air, water, ethylene glycol, etc. The absorber layer can be made of any material with sufficient thermal and hydrolytic stability. Examples include polysulfones, modified poly(phenylene oxides), polyetheretherketone (PEEK), and polyimide. The glazing layer can comprise a monolithic or a multiwall sheet. When comprising a multiwall sheet, the glazing layer can comprise, for example, a first wall, a second wall, and ribs disposed therebetween the first wall and the second wall. Additional walls (e.g., a third wall, fourth wall, etc.) and additional ribs dispersed therebetween can also be present. The thermo-responsive layer can comprise a matrix polymer and an inorganic filler. The transmission of a glazing layer can depend on the number of air/polymer interfaces so that a twin wall sheet will have less transmission than a monolithic sheet and a triple wall sheet even less. The effect of the added layers on the energy reaching the absorber layer can be more than compensated for by improved insulation provided by the multiple walls at an optimum number of walls.

The mismatch of the refractive indices of the matrix polymer and inorganic filler at temperatures above the Tg of the matrix polymer can provide reflection of the incoming light, which during stagnation periods, can reduce the temperature extremes experienced by the thermo-responsive assembly, thereby resulting in a lower likelihood of failure (e.g., buckling, warping, thermal expansion, etc.) of the other components of the thermo-responsive assembly. Stated another way, the thermo-responsive assemblies disclosed herein can provide protection to the various other components of the thermo-responsive assembly (i.e., panels (e.g., solar panels) against failure or damage due to exposure to temperatures above the heat deflection temperature of the components. The thermo-responsive layer can be attached (e.g., laminated, co-extruded, dispersed across) the glazing layer and/or the absorber layer. An air gap can be present between the thermo-responsive layer and the absorber layer.

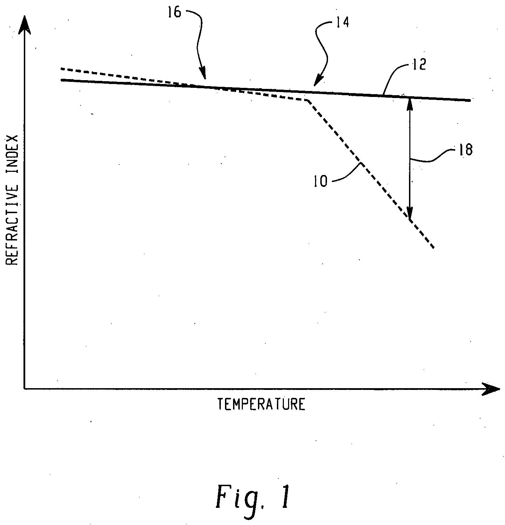

As previously mentioned, a thermo-responsive layer comprising a transparent polymer (i.e., matrix polymer) and an inorganic material (i.e., filler) having a particle size less than or equal to 10 μm and a matching refractive index with the matrix polymer (e.g., wherein the refractive indices differ by less than or equal to 0.05 at 25°C, specifically, less than or equal to 0.01 at 25°C) can demonstrate little or no change in the reflection of incident light at temperatures below the Tg of the matrix polymer. Although not wishing to be bound by theory, it is believed this occurs because the refractive index of both materials changes relatively slowly below the Tg. However, above the Tg, the density and hence, the refractive index of the matrix polymer can change rapidly, while the refractive index of the inorganic filler can continue to change very slowly. This can result in an increasingly large refractive index mismatch between the matrix polymer and the filler, which can in turn cause some light to be reflected as shown schematically in Figure 1. For example, as illustrated in Figure 1, the matrix polymer 10 and filler 12 can have the same refractive index 16 below the Tg 14, which can give high transmission. Above the Tg 14, however, the refractive indices can be mismatched illustrated by line 18, resulting in reflection. Thus, the amount of light transmitted through the thermo-responsive layer (e.g., light control layer) can be reduced to an increasing degree above Tg, which can lead to a decrease in the stagnation temperatures experienced by the components of the panel.

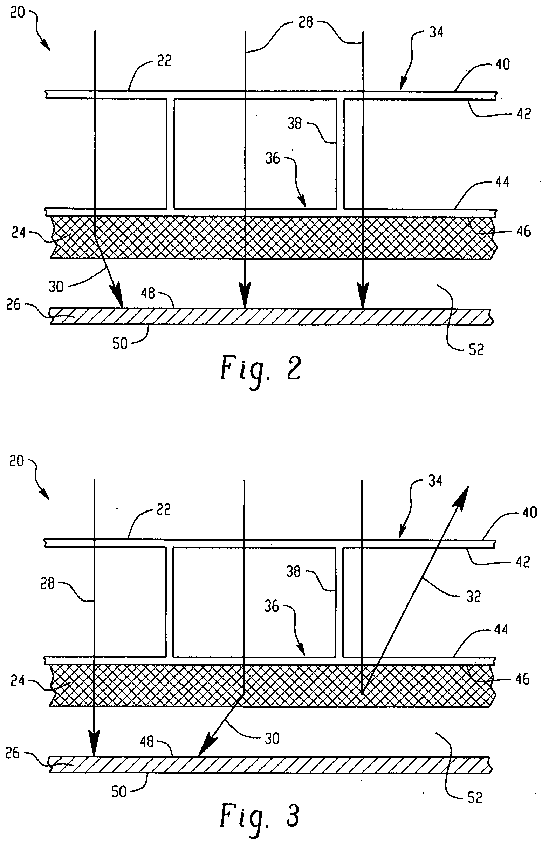

For example, as shown in Figure 2, a thermo-responsive assembly 20 is illustrated that can comprise a glazing layer 22, a thermo-responsive layer 24, and an absorber layer 26. The glazing layer 22 can comprise a solid sheet, a multilayer sheet, or a multiwall sheet. A multiwall sheet having a first wall 34, a second wall 36, and ribs 38 located therebetween is illustrated in Figures 2 and 3. The first wall 34 can have a first wall first surface 40 and a first wall second surface 42, while the second wall 36 can have a second wall first surface 44 and a second wall second surface 46. The absorber layer 26 can comprise an absorber layer first surface 48 and an absorber layer second surface 50. An air gap 52 can be present between the thermo-responsive layer 24 and the absorber layer 26. When the thermo-responsive assembly 20 is exposed to normal use temperatures, the thermo-responsive assembly 20 can experience little or no reflection of the incoming light 28 by the thermo-responsive layer 24. Some haze or forward scattering 30 can be experienced and is acceptable because as shown in Figure 2, the light still reaches the absorber layer 26. At elevated temperatures above the Tg of the matrix polymer, as shown in Figure 3, there is increased scattering 30 and reflection 32, so that less incoming light 28 reaches the absorber layer 26. Since the absorber layer 26 can be partially shaded as shown in Figure 3, the temperature rise of the thermo-responsive assembly 20 can be attenuated.

The thermo-responsive layer 24 can be firmly attached to the glazing layer 22 and/or the absorber layer 26, with either or both of the glazing layer 22 and the absorber layer 26 providing mechanical support for the thermo-responsive layer 24, since the thermo-responsive layer 24 generally becomes mechanically weak at temperatures above the Tg. For example, the thermo-responsive layer 24 can be co-extruded with the absorber layer 26 or with the glazing layer 22 or can be laminated onto the absorber layer 26 or the glazing layer 22. The location of the thermo-responsive layer 24 is not limited and can generally be in any location within the thermo-responsive assembly 20. For example, the thermo-responsive layer 24 can be located on the first wall first surface 40, first wall second surface 42, second wall first surface 44, the second wall second surface 46, or the absorber layer first surface 48. It is not generally desirable for the thermo-responsive layer 24 to be on the absorber layer second surface 50 because no light reaches the absorber layer second surface 50. It can generally be desirable for the thermo-responsive layer 24 to be dispersed across the second wall second surface 46 as shown in Figure 3.

The Tg of the matrix polymer used in the thermo-responsive layer can be adjusted to be approximately equal to the temperature attained during normal working conditions, for example, with the use of plasticizers in the thermo-responsive layer. The polymer used in the thermo-responsive layer can also be selected on the basis of the Tg being approximately equal to the temperature attained during normal working conditions; for example, difference between the Tg of the polymer and the normal working conditions can be less than or equal to 20°C, or less than or equal to 15°C, or less than or equal to 10°C, and preferably less than or equal to 5°C). It is also desirable that the Tg of the polymer be greater than the temperature at the normal working conditions. In some applications, the normal working conditions can be 50°C to 70°C. Therefore, if the temperature at the normal working conditions of 50°C, the Tg of the polymer can be 30°C to 70°C, and is desirabley 50°C to 70°C.

The Tg of the polymer can be, for example, greater than or equal to 25°C and less than or equal to 100°C, specifically, the Tg can be 50°C to 100°C, more specifically, 60°C to 90°C, and even more specifically, 65°C to 85°C. The refractive indices of the matrix polymer and the filler can be any value as long as they are matched $\pm$ 0.05 at 25°C, for example, the refractive index of the matrix can be 1.4 to 1.75, specifically, 1.45 to 1.7, and more specifically, 1.47 to 1.59. Aliphatic methacrylates generally have a refractive index of 1.47, polycarbonate generally has a refractive index of 1.58, and polystyrene generally has a refractive index of 1.59. In general, it can be desirable for the refractive index of the polymer and the refractive index of the inorganic filler to match to within 0.05, specifically, within 0.01, and more specifically, within 0.005, at 25°C. However, if the refractive index cannot be matched, it can be desirable for the refractive index of the polymer to be 0.005 to 0.02 less than that of the filler.

Possible polymeric resins that can be employed for the matrix polymer used in the thermo-responsive layer can comprise any transparent homopolymer, copolymer, or blend thereof. It can be desirable for the matrix polymer to have optical transparency, a Tg within the desired range (with or without the use of plasticizers), and stability toward light and heat. Examples of desirable polymers include polyesters, polycarbonates, polystyrene, poly(methyl methacrylate) (PMMA), poly(ethyl methacrylate), poly(butyl methacrylate), poly(styrene-co-methyl methacrylate), poly(styrene-co-acrylonitrile) (SAN), poly(methyl methacrylate-co-styrene-co-acrylonitrile) (MMASAN), and other copolymers of styrene, acrylonitrile, various (meth)acrylic acids, and various (meth)acrylates, as well as combinations comprising at least one of the foregoing. For example, the matrix polymer can comprise PMMA or can comprise a combination of PMMA and SAN and/or the matrix polymer can comprise a combination of two or more of PMMA, SAN, and poly(butyl methacrylate). The matrix polymer can be selected such that the Tg is in the desired range or can be brought within the desired range with the help of additives such as plasticizers. Desirably, the refractive index of the matrix polymer will approximately match or have a value slightly less than the refractive index of the filler (e.g., be within 0.005 to 0.02) at normal working temperatures so that the total forward transmission of the glazing layer plus the thermo-responsive layer is greater than 80%. Forward transmission generally refers to all light emanating from the non-irradiated surface of the article, i.e., all light that is not reflected, absorbed, or going out the edges. Forward transmission includes both direct transmission along the normal line as well as any light scattered off-normal (haze). Measurement of total forward transmission (or total reflection) is usually accomplished with the use of a spectrometer equipped with an integrating sphere.

It was surprisingly discovered that incorporating relatively small amounts, for example, 0.5 to 10 wt.%, specifically, 1 to 5 wt.% of repeat units derived from acrylonitrile in the backbone of the matrix polymer can result in creep reduction, e.g., a greater than or equal to 20% reduction, specifically, a 20 to 50% reduction in the extent of creep. Specifically, the matrix polymer can comprise a copolymer comprising 0.5 to 10 wt.%, specifically, 1 to 5 wt.% of acrylonitrile based on the total weight of the matrix polymer. The matrix polymer can further comprise 90 to 99.5 wt.%, specifically, 95 to 99 wt.% of any of the other aforementioned matrix polymers based on the total weight of the matrix polymer. For example, the matrix polymer can comprise a copolymer comprising 0.5 to 10 wt.% of polyacrylonitrile repeat units based on the total weight of the matrix polymer and 90 to 99.5 wt.%, of a polystyrene and/or polyacrylate repeat units based on the total weight of the matrix polymer. The polyacrylate can be, for example, polymethacrylate, poly(methyl methacrylate), poly(ethyl methacrylate), poly(butyl methacrylate), or a combination comprising one or more of the foregoing. When the matrix polymer comprises polystyrene and polyacrylate repeat units, the ratio of polystyrene to polyacrylate can be 10:1 to 1:10, specifically, 6:1 to 1:1, more specifically, 5:1 to 3:1.

The acrylonitrile can be randomly dispersed throughout the matrix polymer backbone, where the resulting copolymer can be polymerized by free-radical polymerization of the respective monomers. The weight average molecular weight, Mw, of the matrix polymer can be 10 to 300 kilograms per mole (kg/mol), specifically, 50 to 200 kg/mol as determined by gel permeation chromatography (GPC) based on polycarbonate standards. The number average molecular weight, Mn, of the matrix polymer can be 5 to 300 kilograms per mole (kg/mol), specifically, 20 to 150 kg/mol as determined by gel permeation chromatography (GPC) based on polycarbonate standards.

The thermo-responsive layer or matrix polymer can also include various additives ordinarily incorporated into polymer compositions of this type, with the proviso that the additive(s) are selected so as to not significantly adversely affect the desired properties of the thermo-responsive layer, in particular, the ability of the thermo-responsive layer to reflect incoming light. Examples of additives that can be included in the matrix polymer or the thermo-responsive layer include optical effects fillers, impact modifiers, fillers, reinforcing agents, antioxidants, heat stabilizers, light stabilizers, ultraviolet (UV) light stabilizers, plasticizers, lubricants, mold release agents, antistatic agents, colorants (such as carbon black and organic dyes), surface effect additives, radiation stabilizers (e.g., infrared absorbing), gamma stabilizer, flame retardants, and anti-drip agents. A combination of additives can be used, for example, a combination of a heat stabilizer, mold release agent, and ultraviolet light stabilizer. In general, the additives are used in the amounts generally known to be effective. Each of these additives can be present in amounts of 0.0001 to 10 wt.%, based on the total weight of the thermo-responsive layer.

For example, plasticizing agents can be used to adjust the Tg and the refractive index and additives such as antioxidants and light stabilizers can also be present in the matrix polymer or thermo-responsive layer. Plasticizers for inclusion in the matrix polymer and/or thermo-responsive layer can include benzoate esters of polyols such as penterythritol tetrabenzoate, aliphatic esters, and aryl esters of phosphates such as resorcinol bis(diphenyl phosphate), as well as combinations comprising at least one of the foregoing. When the thermo-responsive layer comprises, for example, a poly(styrene-co-butyl methacrylate) copolymer, the layer can be free of, i.e., can comprise 0 wt.% of a plasticizer such as resorcinol bis(diphenyl phosphate).

The matrix polymer or thermo-responsive layer can further optionally include a flame retardant. Flame retardants include organic and/or inorganic materials. Organic compounds include, for example, phosphorus, sulphonates, and/or halogenated materials (e.g., comprising bromine chlorine, and so forth, such as brominated polycarbonate). Non-brominated and non-chlorinated phosphorus-containing flame retardant additives can be preferred in certain applications for regulatory reasons, for example, organic phosphates and organic compounds containing phosphorus-nitrogen bonds.

Inorganic flame retardants include, for example,

$C_{1-16}$ alkyl sulfonate salts such as potassium perfluorobutane sulfonate (Rimar salt), potassium perfluorooctane sulfonate, tetraethyl ammonium perfluorohexane sulfonate, and potassium diphenylsulfone sulfonate (e.g., KSS); salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame retardant salts are present in amounts of 0.01 to 10 parts by weight, more specifically, 0.02 to 1 parts by weight, based on 100 parts by weight of the thermo-responsive layer.

Light stabilizers and/or ultraviolet light (UV) absorbing stabilizers can also be used. Exemplary UV light absorbing stabilizers include hydroxybenzophenones; hydroxybenzotriazoles; hydroxyphenyl triazines (e.g., 2-hydroxyphenyl triazines); cyanoacrylates; oxanilides; benzoxazinones; dibenzoylresorcinols; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2-[4,6-diphenyl-1.3.5-triazin-2-yl]-5-(hexyloxy)-phenol (Tinuvin 1577), 2,2'-(1,4- phenylene)bis(4H-3,1-benzoxazin-4-one) (CYASORB™ UV-3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; 4,6-dibenzoylresorcinol, nano-size inorganic materials such as titanium oxide, cerium oxide, and zinc oxide, all with a particle size of less than or equal to 100 nanometers, or combinations comprising at least one of the foregoing UV light absorbing stabilizers. UV light absorbing stabilizers are used in amounts of 0.01 to 5 parts by weight, based on 100 parts by weight of the total composition, excluding any filler.

Anti-drip agents can also be used in the matrix polymer or thermo-responsive layer, for example, a fibril forming fluoropolymer such as polytetrafluoroethylene (PTFE). The anti-drip agent can be encapsulated by a rigid copolymer, for example, styrene-acrylonitrile copolymer (SAN). PTFE encapsulated in SAN is known as TSAN. An exemplary TSAN comprises 50 wt.% PTFE and 50 wt.% SAN, based on the total weight of the encapsulated fluoropolymer. The SAN can comprise, for example, 75 wt.% styrene and 25 wt.% acrylonitrile based on the total weight of the copolymer. Anti-drip agents can be used in amounts of 0.1 to 10 parts by weight, based on 100 parts by weight of the total composition of the particular layer, excluding any filler.

Any inorganic filler can be used in the thermo-responsive layer, however, as previously described herein, it can be desirable for the refractive index of the filler to match the refractive index of the matrix polymer (e.g., be within 0.01 of one another) or for the refractive index of the matrix polymer to be 0.005 to 0.02 less than the refractive index of the filler. Generally, the average particle size can be less than or equal to 10 micrometers ($\mu$m), specifically, less than or equal to 7.5 $\mu$m, more specifically, less than or equal to 5 $\mu$m, and even more specifically, less than or equal to 2 $\mu$m. Examples of fillers include, but are not limited to, silica, quartz, glass, ceramic particles, gypsum, feldspar, calcium silicate, barium metaborate, mica, clays, magnesium hydroxide, aluminum trihydroxide, Fuller's earth, calcium hydroxide, pyrophyllite, talc, zinc borate, and combinations comprising at least one of the foregoing. Desirable fillers can have high purity and a single component with a well-defined refractive index. Examples of such fillers include, but are not limited to glass, magnesium hydroxide, silica and quartz.

The amount of light reflected above the Tg of the filler can depend on the loading of the filler, the particle size of the filler, the thickness of the thermo-responsive layer, and the amount of refractive index mismatch between the filler and the polymer matrix. For example, the thickness of the thermo-responsive layer can be 25 $\mu$m to 2,500 $\mu$m (1 mil to 100 mils), specifically, 100 $\mu$m to 1,250 $\mu$m (4 mils to 50 mils), and more specifically, 250 $\mu$m to 1,000 $\mu$m (10 mils to 40 mils). The filler can be present in the thermo-responsive layer in amounts of 5 wt.% to 80 wt.%, specifically, 10 wt.% to 60 wt.%, and more specifically, 20 wt.% to 60 wt.%. For example, the thermo-responsive layers disclosed herein comprising a matrix polymer and inorganic filler can have a reflection of greater than or equal to 10% when exposed to temperatures above the Tg of the matrix polymer at a thickness of 25 $\mu$m to 2500 $\mu$m.

The thermo-responsive layer can be fabricated by any means including solvent casting, melt casting, extrusion, blow molding, or co-extrusion onto a substrate. For example, the co-extruded substrate can be a surface of the glazing layer (e.g., the second wall second surface) and/or can be a surface of the absorber layer (e.g., the absorber layer first surface. If fabricated separately, the thermo-responsive layer can be laminated onto the glazing layer or the absorber layer with or without an adhesive layer (e.g., a tie layer).

The thickness of the thermo-responsive assembly can vary depending upon the thickness of the individual components of the thermo-responsive assembly. For example, the glazing layer can comprise a monolithic (e.g., one wall) sheet or a multiwall sheet (e.g., comprising greater than one wall with greater than one air channel (e.g., rib) located therebetween). Generally, the thickness of the glazing layer can be less than or equal to 55 millimeters (mm), specifically, 4 mm to 55 mm, more specifically, 2 mm to 35 mm, even more specifically, 1 mm to 25 mm, and still more specifically, 0.5 mm to 20 mm, as well as any and all ranges and endpoints located therebetween. For example, for a multiwall sheet, the total thickness can be 4 mm to 55 mm, while for a monolithic sheet, the total thickness can be 0.5 mm to 20 mm. The thickness of the thermo-responsive layer can be 25 $\mu$m to 2,500 $\mu$m, specifically, 100 $\mu$m to 1,250 $\mu$m, and more

specifically, 250 μm to 1,000 μm, while the thickness of the absorber layer can be 1 mm to 55 mm, specifically, 2 mm to 35 mm, more specifically, 2 mm to 25 mm, and even more specifically, 3 mm to 15 mm.

Transparency can be desired at temperatures lower than the Tg of the thermo-responsive layer. Percent transmission for laboratory scale samples can be determined using ASTM D1003-00, Procedure B using CIE standard illuminant C. ASTM D-1003-00 (Procedure B, Spectrophotometer, using illuminant C with diffuse illumination with unidirectional viewing) defines transmittance as:

$$\%T = \left(\frac{I}{I_o}\right) x 100\% \tag{1}$$

wherein: I = intensity of the light passing through the test sample

$I_o$ = Intensity of incident light.

Compared to an assembly of a glazing layer without a thermo-responsive layer, an assembly of glazing layer with a thermo-responsive layer, at temperatures below the Tg of a matrix polymer of the thermo-responsive layer can decrease the total transmission (i.e., direct + diffuse) by less than or equal to 5%, specifically, by less than or equal to 3%, and more specifically, by less than or equal to 2%. The glazing layer and/or the thermo-responsive layer can also desirably have an ultraviolet light stability of 20 years such that they retain greater than or equal to 80% of their light transmission capabilities over that 20 year period.

The thermo-responsive assemblies can likewise be used in any application where, for example, it is desirable to regulate temperature based on light reflection (such as in solar panels, in photovoltaic applications (e.g., photovoltaic cell), and in greenhouse applications (e.g., greenhouse roof)). The thermo-responsive layer can be applied to a glass and/or to a plastic window (such as a vehicle window and a building window, for example, a greenhouse, an office, and a house).

The thermo-responsive assemblies as described herein are further illustrated by the following non-limiting examples.

EXAMPLES

Example 1: Preparation of a matrix terpolymer 1

80 milliliters (mL) of toluene (Fisher, optima grade); 64 grams (g) (614 mmol) of styrene (Aldrich, purified by distillation); 17.5 g (123 millimole (mmol)) of n-butyl methacrylate (Aldrich, purified by distillation); 0.815 g (15 mmol) of acrylonitrile (Aldrich); and 150 milligrams (mg) (0.913 mmol) azobisisobutyronitrile (AIBN) (Aldrich, recrystallized from methanol) were added to a 250 mL round-bottomed flask equipped with a nitrogen diffusion tube, mechanical stirring, a reflux condenser, and thermocouple. The flask was sealed allowing only nitrogen in through the diffusion tube and gasses out through the condenser and then through a silicone oil bubbler. A stream of nitrogen was bubbled through the round-bottomed flask below the surface of the solution to remove oxygen for 30 minutes then the nitrogen tube was raised out of the solution and the rate of nitrogen purge reduced to a very slow bubble. The temperature was then brought to 60°C. The reaction was heated for two days and then allowed to cool to room temperature. Once cooled, the contents of the flask were transferred to an addition funnel and the flask was rinsed twice with 100 mL of chloroform. The chloroform solution was added to the addition funnel and shaken, homogenizing the solution. The polymer was precipitated by slowly adding 100 mL of the chloroform solution to 500 mL of methanol in a rapidly stirred blender. The precipitate was collected by vacuum filtration and rinsed with fresh methanol. This was repeated until all the chloroform solution was precipitated. The polymer was dissolved in 250 mL of chloroform and precipitated again. A third precipitation was done to remove as much unreacted monomer and toluene as possible before drying in a vacuum oven at 40°C or less for three days. This polymerization resulted in a 1 wt.% acrylonitrile copolymer with an Mw of 93 kilograms per mole (kg/mol) as determined by GPC based on polycarbonate standards.

Examples 2-4: Preparation of matrix terpolymers 2-4

The polymerization method of Example 1 was repeated to polymerize matrix polymers of varying amounts of acrylonitrile and molecular weights, where the resulting amounts of acrylonitrile, the Mw, the Mn, and the Tg can be seen in Table 1.

| Table 1 | | | | |
|---|---|---|---|---|
| Matrix terpolymer | 1 | 2 | 3 | 4 |
| Acrylonitrile (wt.%) | 1 | 1 | 5 | 0 |
| Mw (kg/mol) | 93 | 133 | 143 | 152 |
| Mn (kg/mol) | 32 | 62 | 78 | 74 |
| Tg (°C) | 79 | 78 | 77 | 81 |

Example 5: Rheological properties of terpolymers 1-4

The rheological properties were determined by first preparing corresponding filled terpolymer samples 1-4 comprising 50 wt.% of a filler. Specifically, five grams of matrix polymer were dissolved in 20 mL of chloroform in a 100 milliliter plastic beaker. 5 g of Mg(OH)$_2$ filler was added and mixed in a high sheer mixer for 5 minutes. The resulting solution was then poured into two aluminum tins and dried first on a warm plate at ambient pressure then dried in a vacuum oven for 15 hours at 50°C. The dried resin was the removed from the pans and crushed into a powder. The samples were then vacuum dried at 50°C for a minimum of 20 hours. They were then compression molded into 25 mm diameter by approximately 2 mm thick disks at a temperature of approximately 130°C. After molding, they were returned to a 50°C vacuum oven to maintain dryness until they were used.

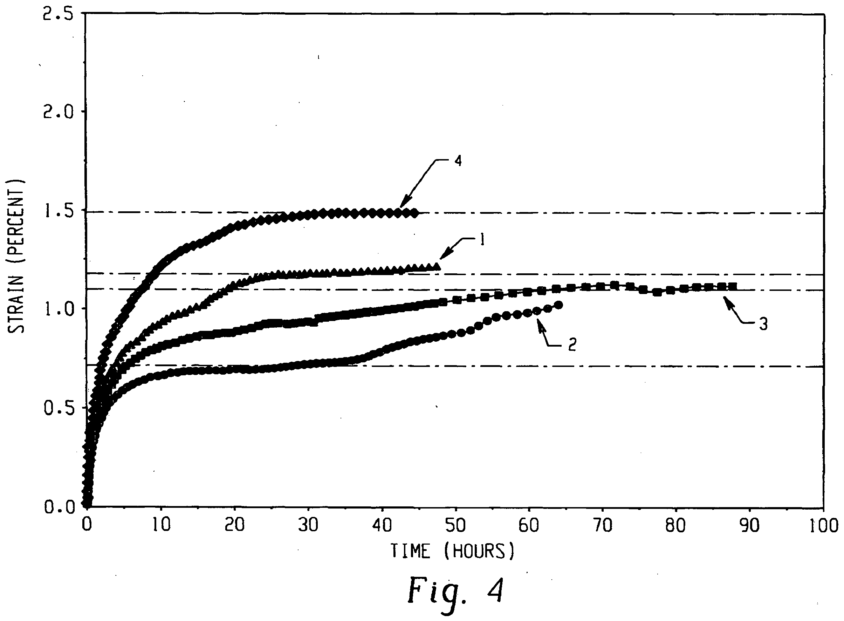

Creep measurements were performed on the filled terpolymer samples by applying a fixed stress to a sample and monitoring the resulting deformation or strain with time using a TA Instruments AR G2 rheometer equipped with nitrogen purged oven and 25 mm diameter parallel plates. The measurements were done at 140°C in shear using an applied stress of 20 Pascals (Pa), where the results can be seen Figure 4.

Figure 4 shows that the deformation with time, i.e., the extent of creep, is significantly reduced in filled terpolymer samples 1-3 that comprise acrylonitrile repeat units relative to the filled terpolymer sample 4 that did not comprise acrylonitrile repeat units. The fact that the coatings ultimately reach constant strain values, as indicated by the dashed lines in Figure 4, indicates that they have a yield stress greater than the applied stress of 20 Pa. It is believed that a yield stress of greater than 20 Pa should be adequate to prevent the coatings from exhibiting creep when used in the thermo-responsive layer, provided the coating is not overly thick. The reduced creep exhibited by filled terpolymer samples 1-3 indicates that they are more robust, and therefore are able to tolerate more abusive conditions. While the strain appears to resume increasing for filled terpolymer sample 2 after maintaining a plateau value at intermediate times, it is noted that the measured strain values are still significantly lower than those of control sample 4 and are in fact lowest values measured at all times relative to all of the samples measured.

It is further noted that the results in Figure 4 that show that compositions containing acrylonitrile exhibit both reduced creep and reduced terminal strain values are further surprising considering the lower molecular weight values of the matrix terpolymers 1-3 relative to the control copolymer, matrix terpolymer 4.

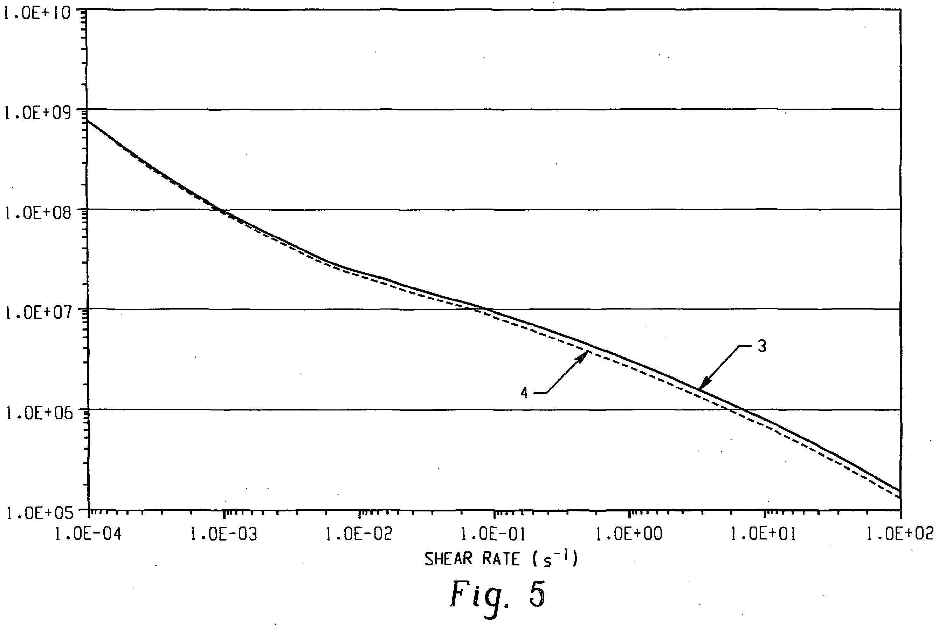

Viscosity measurements at 140°C were further performed on filled terpolymer samples 3 and 4, where the viscosity in poise (P) is shown versus shear rate in 1/seconds ($s^{-1}$) in Figure 5. Figure 5 shows that the improvements in the creep properties of the acrylonitrile containing sample occurs without a corresponding increase in the coating viscosity. In other words, the similar viscosities indicate that improved creep resistance is obtained without paying a penalty in the ability to process the coatings.

Example 5: Reflectivity properties of filled terpolymer sample 2

In order to determine the effect of acrylonitrile in the copolymer on the optical performance of the thermo-responsive layer, the change in reflectivity versus temperature was measured. The sample was prepared by placing approximately 1.6 g of the filled terpolymer sample 2 in a shimmed compression mold backed with Ferrotype plates, heating to approximately 160°C in a Carver press for 5 minutes at 4 tons ($3.6 \times 10^3$ kilograms) of pressure, and then allowing the sample to cool to approximately 60°C under pressure. This resulted in a disk 2 inches (5.1 cm) in diameter that was 20 mils (508 micrometers) thick. The disk was then laminated to a 10 mil (254 micrometers) thick polycarbonate film by the same procedure in order to provide extra support during the thermal testing.

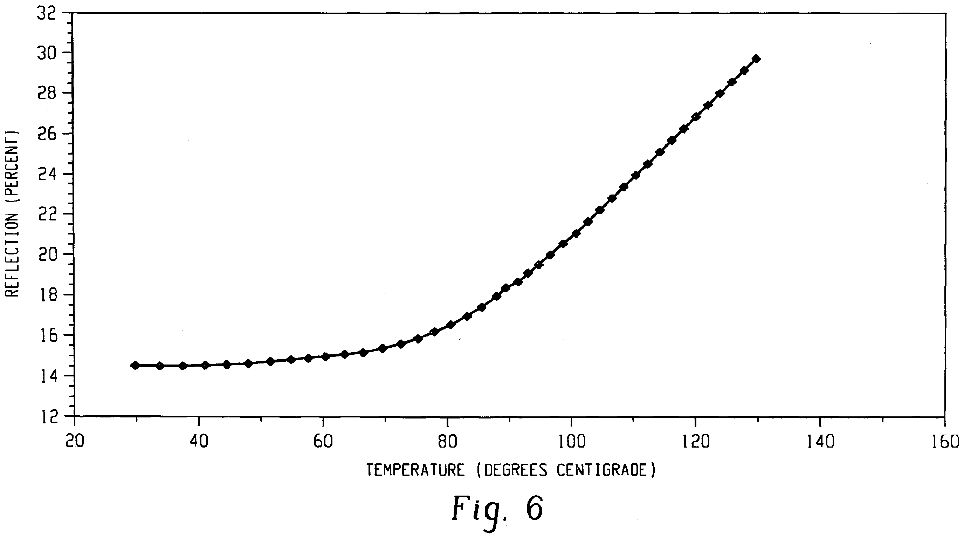

Figure 6 shows the % reflection values over the range of 30 to 130°C, where there was an increase in the reflectivity of 15.3% from 14.3% to 29.6%. These results compared favorably to a sample prepared with no acrylonitrile which showed an equivalent change in reflectivity of 14.8% over the same temperature range.

It is to be understood that the matrix polymer and inorganic filler is not limited to those disclosed herein and used in the examples. One skilled in the art will readily be able to select a polymer for the matrix polymer and based upon the refractive index of that polymer chose the inorganic filler accordingly.

Set forth below are some embodiments of connectors and methods of making connectors as disclosed herein.

Embodiment 1: an assembly, comprising: a glazing layer; a light absorbing layer; and a thermo-responsive layer between the glazing layer and the light absorbing layer. The thermo-responsive layer comprises a matrix polymer having a glass transition temperature and an inorganic filler having a particle size. The matrix polymer comprises 0.5 to 10 weight percent of repeat units derived from acrylonitrile, based upon a total weight of the matrix polymer, wherein the refractive indices of the matrix polymer and the inorganic filler differ by less than or equal to 0.05 at 25°C.

Embodiment 2: the assembly of Embodiment 1, wherein matrix polymer comprises 1 to 5 weight percent of repeat units derived from acrylonitrile.

Embodiment 3: the assembly of any of Embodiments 1-2, wherein matrix polymer further comprises polystyrene and/or polyacrylate repeat units.

Embodiment 4: the assembly of Embodiment 3, wherein the polyacrylate comprises polymethacrylate, poly(methyl methacrylate), poly(ethyl methacrylate), poly(butyl methacrylate), or a combination comprising one or more of the foregoing.

Embodiment 5: the assembly of any of Embodiments 3-4, wherein the ratio of polystyrene to polyacrylate is 10:1 to 1:10.

Embodiment 6: the assembly of any of Embodiments 3-5, wherein the ratio of polystyrene to polyacrylate is 6:1 to 1:1.

Embodiment 7: the assembly of any of Embodiments 1-6, wherein the glass transition temperature is 25°C to 100°C.

Embodiment 8: the assembly of any of Embodiments 1-7, wherein the glass transition temperature is 60°C to 90°C.

Embodiment 9: the assembly of any of Embodiments 1-8, wherein the glass transition temperature is 65°C to 85°C.

Embodiment 10: the assembly of any of Embodiments 1-9, wherein the particle size is less than or equal to 10 micrometers.

Embodiment 11: the assembly of Embodiment 10, wherein the particle size is less than or equal to 5 micrometers.

Embodiment 12: the assembly of Embodiment 11, wherein the particle size is less than or equal to 2 micrometers.

Embodiment 13: the assembly of any of Embodiments 1-12, wherein the matrix polymer refractive index is 1.4 to 1.75.

Embodiment 14: the assembly of any of Embodiments 1-13, wherein the refractive indices of the inorganic filler and the matrix polymer differ by less than or equal to 0.01 at 25°C.

Embodiment 15: the assembly of any of Embodiments 1-14, wherein the glazing layer comprises a multiwall sheet comprising a first wall, a second wall, and ribs disposed therebetween. The first wall has a first wall first surface and a first wall second surface, and the second wall has a second wall first surface and a second wall second surface. The thermo-responsive layer is attached to the second wall second surface.

Embodiment 16: the assembly of any of Embodiments 1-15, wherein an air gap is present between the thermo-responsive layer and the light absorbing layer.

Embodiment 17: the assembly of any of Embodiments 1-16, wherein the matrix polymer has greater than or equal to 85% transparency measured according to ASTM D1003-00.

Embodiment 18: the assembly of any of Embodiments 1-17, wherein the matrix polymer comprises polyesters, polycarbonates, polystyrene, poly(methyl methacrylate), poly(ethyl methacrylate), poly(styrene-co-methyl methacrylate), poly(styrene-co-acrylonitrile), poly(methyl methacrylate-co-styrene-co-acrylonitrile), copolymers of styrene, acrylonitrile, (meth)acrylic acids, and (meth)acrylates, and combinations comprising at least one of the foregoing.

Embodiment 19: the assembly of any of Embodiments 1-18, wherein the matrix polymer comprises poly(methyl methacrylate), poly(styrene-co-acrylonitrile), or a combination comprising at least one of the foregoing.

Embodiment 20: the assembly of any of Embodiments 1-19, wherein the thermo-responsive layer further comprises a plasticizer.

Embodiment 21: the assembly of Embodiment 20, wherein the plasticizer comprises benzoate esters, aliphatic esters, aryl esters of phosphates, and combinations comprising at least one of the foregoing.

Embodiment 22: the assembly of Embodiment 21, wherein the plasticizer comprises penterythritol tetrabenzoate, resorcinol bis(diphenyl phosphate), and combinations comprising at least one of the foregoing.

Embodiment 23: the assembly of any of Embodiments 1-22, wherein the filler comprises silica, quartz, glass, ceramic particles, gypsum, feldspar, calcium silicate, barium metaborate, mica, clays, magnesium hydroxide, aluminum trihydroxide, Fuller's earth, calcium hydroxide, pyrophyllite, talc, zinc borate, and combinations comprising at least one of the foregoing.

Embodiment 24: the assembly of any of Embodiments 1-23, wherein the filler comprises magnesium hydroxide.

Embodiment 25: the assembly of any of Embodiments 1-23, wherein the filler comprises glass.

Embodiment 26: the assembly of any of Embodiments 1-25, wherein the filler is present in an amount of 5% to 80% by weight.

Embodiment 27: the assembly of any of Embodiments 1-26, wherein the thermo-responsive layer, having a thickness of 25 $\mu$m to 2,500 $\mu$m, has greater than or equal to 10% reflection when exposed to temperatures greater than a glass transition temperature of the matrix polymer.

Embodiment 28: a method of making the assembly of any of Embodiments 1-27, comprising: forming the glazing layer; forming the light absorbing layer; and forming the thermo-responsive layer, wherein the thermo-responsive layer is between the glazing layer and the light absorbing layer. The thermo-responsive layer comprises a matrix polymer having a glass transition temperature and an inorganic filler having a particle size, wherein the matrix polymer comprises 0.5 to 10 weight percent of repeat units derived from acrylonitrile, based upon a total weight of the matrix polymer, wherein the refractive indices of the matrix polymer and the inorganic filler differ by less than or equal to 0.05 at 25°C.

Embodiment 29: a method of making an assembly, comprising: determining a normal working temperature of the assembly; forming a glazing layer; forming a light absorbing layer; choosing a matrix polymer so that a difference between a glass transition temperature of the matrix polymer and the normal working temperature is less than or equal to 20°C; and forming a thermo-responsive layer, wherein the thermo-responsive layer is between the glazing layer and the light absorbing layer. The thermo-responsive layer comprises the matrix polymer and an inorganic filler, and wherein the refractive indices of the matrix polymer and the inorganic filler differ by less than or equal to 0.05 at 25°C.

Embodiment 30: the method of Embodiment 29, wherein the matrix polymer comprises 0.5 to 10 weight percent of repeat units derived from acrylonitrile, based upon a total weight of the matrix polymer.

Embodiment 31: the method of any of Embodiments 28-29, further comprising co-extruding the glazing layer and the thermo-responsive layer.

Embodiment 32: the method of any of Embodiments 28-29, further comprising laminating the thermo-responsive layer to a surface of the glazing layer.

Embodiment 33: the method of any of Embodiments 28-32, further comprising co-extruding the light absorbing layer and the thermo-responsive layer.

Embodiment 34: the method of any of Embodiments 28-32, further comprising laminating the thermo-responsive layer to a surface of the light absorbing layer.

Embodiment 35: the method of any of Embodiments 28-32, wherein the assembly is a solar panel.

Embodiment 36: The method of any of Embodiments 28 and 30-35, further comprising determining a normal working temperature of the assembly, and choosing the matrix polymer so that a difference between the glass transition temperature and the normal working temperature is less than or equal to 20°C.

Embodiment 37: An article comprising the assembly of any of Embodiments 28-36.

Embodiment 38: the article of Embodiment 37, wherein the article is a window.

Embodiment 39: the article of Embodiment 37, wherein the article is used in photovoltaic applications and/or in a greenhouse applications.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to determine one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. An assembly, comprising:

   a glazing layer (22);
   a light absorbing layer 26; and
   a thermo-responsive layer (24) between the glazing layer (22) and the light absorbing layer (26),
   wherein the thermo-responsive layer (24) comprises a matrix polymer having a glass transition temperature and an inorganic filler having a particle size, wherein the matrix polymer comprises 0.5 to 10 weight percent of repeat units derived from acrylonitrile, based upon a total weight of the matrix polymer, wherein the refractive indices of the matrix polymer and the inorganic filler differ by less than or equal to 0.05 at 25°C.

2. The assembly of Claim 1, wherein matrix polymer comprises 1 to 5 weight percent of repeat units derived from acrylonitrile.

3. The assembly of any of Claims 1-2, wherein matrix polymer further comprises polystyrene and/or polyacrylate repeat units.

4. The assembly of Claim 3, wherein the ratio of polystyrene to polyacrylate is 10:1 to 1:10.

5. The assembly of any of Claims 1-4, wherein the glass transition temperature is 25°C to 100°C or 60°C to 90°C or 65°C to 85°C.

6. The assembly of any of Claims 1-5, wherein the particle size is less than or equal to 10 micrometers or less than or equal to 5 micrometers or less than or equal to 2 micrometers.

7. The assembly of any of Claims 1-6, wherein the matrix polymer refractive index is 1.4 to 1.75 and/or wherein the refractive indices of the inorganic filler and the matrix polymer differ by less than or equal to 0.01 at 25°C.

8. The assembly of any of Claims 1-7, wherein the glazing layer (22) comprises a multiwall sheet comprising a first wall (34), a second wall (36), and ribs (38) disposed therebetween, wherein the first wall (34) has a first wall first surface (40) and a first wall second surface (42) and the second wall (36) has a second wall first surface (44) and a second wall second surface (46), wherein the thermo-responsive layer (24) is attached to the second wall second surface (46).

9. The assembly of any of Claims 1-8, wherein an air gap (52) is present between the thermo-responsive layer (24) and the light absorbing layer (26).

10. The assembly of any of Claims 1-9, wherein the thermo-responsive layer (24) further comprises a plasticizer.

11. The assembly of any of Claims 1-10, wherein the thermo-responsive layer (24), having a thickness of 25 $\mu$m to 2500 $\mu$m, has greater than or equal to 10% reflection when exposed to temperatures greater than a glass transition temperature of the matrix polymer.

12. A method of making the assembly of any of Claims 1-11, comprising:

   forming the glazing layer (22);
   forming the light absorbing layer (26); and
   forming the thermo-responsive layer (24), wherein the thermo-responsive layer (24) is between the glazing layer (22) and the light absorbing layer (26) to form the assembly;
   wherein the thermo-responsive layer (24) comprises a matrix polymer having a glass transition temperature and an inorganic filler having a particle size, wherein the matrix polymer comprises 0.5 to 10 weight percent of repeat units derived from acrylonitrile, based upon a total weight of the matrix polymer, wherein the refractive indices of the matrix polymer and the inorganic filler differ by less than or equal to 0.05 at 25°C.

13. The method of Claim 12, further comprising co-extruding the glazing layer (22) and the thermo-responsive layer (24). or laminating the thermo-responsive layer (24) to a surface of the glazing layer (22).

14. The method of any of Claims 12-13, further comprising co-extruding the light absorbing layer (26) and the thermo-responsive layer (24). or laminating the thermo-responsive layer (24) to a surface of the light absorbing layer (26).

15. The method of any of Claims 12-14, further comprising determining a normal working temperature of the assembly, and choosing the matrix polymer so that a difference between the glass transition temperature and the normal working temperature is less than or equal to 20°C.

**Patentansprüche**

1. Ein Aufbau, der Folgendes umfasst:

   eine Glasierschicht (22);
   eine Licht absorbierende Schicht (26); und
   eine thermoreaktive Schicht (24) zwischen der Glasierschicht (22) und der Licht absorbierenden Schicht (26),
   wobei die thermoreaktive Schicht (24) ein Matrixpolymer mit einer Glasübergangstemperatur und einen anorganischen Füllstoff mit einer Partikelgröße umfasst, worin das Matrixpolymer 0,5 bis 10 Gewichtsprozent an Wiederholungseinheiten umfasst, abgeleitet von Acrylonitril, basierend auf einem Gesamtgewicht des Matrixpolymers, wobei die Brechungsindices des Matrixpolymers und des anorganischen Füllstoffs sich bei 25°C um weniger als oder gleich 0,05 unterscheiden.

2. Der Aufbau gemäß Anspruch 1, worin das Matrixpolymer 1 bis 5 Gewichtsprozent Wiederholungseinheiten, abgeleitet von Acrylonitril, umfasst.

3. Der Aufbau gemäß einem der Ansprüche 1-2, worin das Matrixpolymer weiter Polystyrol- und/oder Polyacrylat-Wiederholungseinheiten umfasst.

4. Der Aufbau gemäß Anspruch 3, worin das Verhältnis von Polystyrol zu Polyacrylat 10:1 bis 1:10 beträgt.

5. Der Aufbau gemäß einem beliebigen der Ansprüche 1-4, worin die Glasübergangstemperatur 25°C bis 100°C oder 60°C bis 90°C oder 65°C bis 85°C beträgt.

6. Der Aufbau gemäß einem beliebigen der Ansprüche 1-5, worin die Partikelgröße kleiner gleich 10 Mikrometern oder kleiner gleich 5 Mikrometern oder kleiner gleich 2 Mikrometern ist.

7. Der Aufbau gemäß einem beliebigen der Ansprüche 1-6, wobei der Matrixpolymer-Brechungsindex 1,4 bis 1,75 beträgt, und/oder worin die Brechungsindices des anorganischen Füllstoffs und des Matrixpolymers sich bei 25°C um weniger als oder gleich 0,01 unterscheiden.

**8.** Der Aufbau gemäß einem beliebigen der Ansprüche 1-7, wobei die Glasierschicht (22) eine Mehrfachwandschicht umfasst, die eine erste Wand (34), eine zweite Wand (36) und dazwischen angeordnete Rippen (38) umfasst, wobei die erste Wand (34) eine erste Wandoberfläche (40) und eine zweite Wandoberfläche (42) der ersten Wand hat und die zweite Wand (36) eine erste Wandoberfläche (44) der zweiten Wand und eine zweite Wandoberfläche (46) der zweiten Wand hat, wobei die thermoreaktive Schicht (24) mit der zweiten Wandoberfläche (46) der zweiten Wand verbunden ist.

**9.** Der Aufbau gemäß einem beliebigen der Ansprüche 1-8, wobei sich ein Luftzwischenraum (52) zwischen der thermoreaktiven Schicht (24) und der Licht absorbierenden Schicht (26) befindet.

**10.** Der Aufbau gemäß einem beliebigen der Ansprüche 1-9, wobei die thermoreaktive Schicht (24) weiter einen Weichmacher umfasst.

**11.** Der Aufbau gemäß einem beliebigen der Ansprüche 1-10, wobei die thermoreaktive Schicht (24), die eine Dicke von 25 μm bis 2500 μm hat, mehr als oder gleich 10% Reflexion hat, wenn sie Temperaturen ausgesetzt wird, die höher sind als eine Glasübergangstemperatur des Matrixpolymers.

**12.** Ein Verfahren zur Herstellung des Aufbaus gemäß einem beliebigen der Ansprüche 1-11, das Folgendes umfasst:

Formen der Glasierschicht (22);
Formen der Licht absorbierenden Schicht (26); und
Formen der thermoreaktiven Schicht (24), worin die thermoreaktive Schicht (24) sich zwischen der Glasierschicht (22) und der Licht absorbierenden Schicht (26) befindet, um den Aufbau zu bilden;
wobei die thermoreaktive Schicht (24) ein Matrixpolymer mit einer Glasübergangstemperatur und einen anorganischen Füllstoff mit einer Partikelgröße umfasst, wobei das Matrixpolymer 0,5 bis 10 Gewichtsprozent an Wiederholungseinheiten umfasst, abgeleitet von Acrylonitril, basierend auf einem Gesamtgewicht des Matrixpolymers, wobei die Brechungsindices des Matrixpolymers und des anorganischen Füllstoffs sich bei 25°C um weniger als oder gleich 0,05 unterscheiden.

**13.** Das Verfahren gemäß Anspruch 12, das weiter das gemeinsame Extrudieren der Glasierschicht (22) und der thermoreaktiven Schicht (24) oder das Auflaminieren der thermoreaktiven Schicht (24) auf eine Oberfläche der Glasierschicht (22) umfasst.

**14.** Das Verfahren gemäß einem beliebigen der Ansprüche 12-13, das weiter das gemeinsame Extrudieren der Licht absorbierenden Schicht (26) und der thermoreaktiven Schicht (24) oder das Auflaminieren der thermoreaktiven Schicht (24) auf eine Oberfläche der Licht absorbierenden Schicht (26) umfasst.

**15.** Das Verfahren gemäß einem beliebigen der Ansprüche 12-14, das weiter Folgendes umfasst: das Bestimmen einer normalen Arbeitstemperatur des Aufbaus und das Wählen des Matrixpolymers derart, dass ein Unterschied zwischen der Glasübergangstemperatur und der normalen Arbeitstemperatur kleiner als oder gleich 20°C ist.

**Revendications**

**1.** Dispositif, comprenant :

une couche de couverture transparente (22) ;
une couche absorbant la lumière (26) ; et
une couche thermosensible (24) entre la couche de couverture transparente (22) et la couche absorbant la lumière (26),
dans lequel la couche thermosensible (24) comprend un polymère matriciel ayant une température de transition vitreuse et une charge inorganique ayant une taille de particule, dans lequel le polymère matriciel comprend de 0,5 à 10 pour cent en poids de motifs répétitifs dérivés de l'acrylonitrile, sur la base d'un poids total du polymère matriciel, dans lequel les indices de réfraction du polymère matriciel et de la charge inorganique diffèrent d'une quantité inférieure ou égale à 0,05 à 25 °C.

**2.** Dispositif selon la revendication 1, dans lequel le polymère matriciel comprend de 1 à 5 pour cent en poids de motifs répétitifs dérivés de l'acrylonitrile.

**3.** Dispositif selon l'une quelconque des revendications 1 à 2, dans lequel le polymère matriciel comprend en outre des motifs répétitifs de polystyrène et/ou de polyacrylate.

**4.** Dispositif selon la revendication 3, dans lequel le rapport du polystyrène au polyacrylate est de 10/1 à 1/10.

**5.** Dispositif selon l'une quelconque des revendications 1 à 4, dans lequel la température de transition vitreuse est de 25 °C à 100 °C ou de 60 °C à 90 °C ou de 65 °C à 85 °C.

**6.** Dispositif selon l'une quelconque des revendications 1 à 5, dans lequel la taille de particule est inférieure ou égale à 10 micromètres ou inférieure ou égale à 5 micromètres ou inférieure ou égale à 2 micromètres.

**7.** Dispositif selon l'une quelconque des revendications 1 à 6, dans lequel l'indice de réfraction du polymère matriciel est de 1,4 à 1,75 et/ou dans lequel les indices de réfraction de la charge inorganique et du polymère matriciel diffèrent d'une quantité inférieure ou égale à 0,01 à 25 °C.

**8.** Dispositif selon l'une quelconque des revendications 1 à 7, dans lequel la couche de couverture transparente (22) comprend une feuille multiparoi comprenant une première paroi (34), une seconde paroi (36), et des nervures (38) disposées entre celles-ci, dans lequel la première paroi (34) comporte une première surface de première paroi (40) et une seconde surface de première paroi (42) et la seconde paroi (36) comporte une première surface de seconde paroi (44) et une seconde surface de seconde paroi (46), dans lequel la couche thermosensible (24) est fixée à la seconde surface de seconde paroi (46).

**9.** Dispositif selon l'une quelconque des revendications 1 à 8, dans lequel une lame d'air (52) est présente entre la couche thermosensible (24) et la couche absorbant la lumière (26).

**10.** Dispositif selon l'une quelconque des revendications 1 à 9, dans lequel la couche thermosensible (24) comprend en outre un plastifiant.

**11.** Dispositif selon l'une quelconque des revendications 1 à 10, dans lequel la couche thermosensible (24), ayant une épaisseur de 25 $\mu$m à 2 500 $\mu$m, présente une réflexion supérieure ou égale à 10 % lorsqu'elle est exposée à des températures supérieures à une température de transition vitreuse du polymère matriciel.

**12.** Procédé de fabrication du dispositif selon l'une quelconque des revendications 1 à 11, comprenant :

la formation de la couche de couverture transparente (22) ;
la formation de la couche absorbant la lumière (26) ; et
la formation de la couche thermosensible (24), la couche thermosensible (24) étant située entre la couche de couverture transparente (22) et la couche absorbant la lumière (26) pour former le dispositif ;
dans lequel la couche thermosensible (24) comprend un polymère matriciel ayant une température de transition vitreuse et une charge inorganique ayant une taille de particule, dans lequel le polymère matriciel comprend de 0,5 à 10 pour cent en poids de motifs répétitifs dérivés de l'acrylonitrile, sur la base d'un poids total du polymère matriciel, dans lequel les indices de réfraction du polymère matriciel et de la charge inorganique diffèrent d'une quantité inférieure ou égale à 0,05 à 25 °C.

**13.** Procédé selon la revendication 12, comprenant en outre la co-extrusion de la couche de couverture transparente (22) et de la couche thermosensible (24) ou l'application de la couche thermosensible (24) sur une surface de la couche de couverture transparente (22).

**14.** Procédé selon l'une quelconque des revendications 12 à 13, comprenant en outre la co-extrusion de la couche absorbant la lumière (26) et de la couche thermosensible (24) ou l'application de la couche thermosensible (24) sur une surface de la couche absorbant la lumière (26).

**15.** Procédé selon l'une quelconque des revendications 12 à 14, comprenant en outre la détermination d'une température de service normale du dispositif, et le choix du polymère matriciel de manière à ce qu'une différence entre la température de transition vitreuse et la température de service normale soit inférieure ou égale à 20 °C.

Fig. 1

Fig. 2

Fig. 3

Fig. 4

EP 2 972 005 B1

Fig. 5

*Fig. 6*

EP 2 972 005 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4268413 A